# EUROPÄISCHE PATENTANMELDUNG

(11) **EP 4 748 750 A2**
(43) Veröffentlichungstag der Anmeldung: **27.05.2026**
(21) Anmeldenummer: 25211320.4
(22) Anmeldetag: 27.10.2025
(51) Int. Cl.: B65G 13/075, B65G 23/08, F16D 57/00

(54) **BREMSROLLE EINES ROLLENFÖRDERERS UND ROLLENFÖRDERER**

(30) Priorität: 25.11.2024 DE 102024134614
(71) Anmelder: STILL GmbH, 22113 Hamburg (DE)
(72) Erfinder: Kleinert, Steffen, 49356 Diepholz (DE)
(74) Vertreter: Patentship Patentanwaltgesellschaft

(57) **Zusammenfassung**

Die Erfindung betrifft eine Bremsrolle (1) eines Rollenförderers, wobei die Bremsrolle (1) eine auf einer drehfest angeordneten Welle (2) drehbar gelagerte Rollenhülse (4) aufweist, wobei eine elektrisch aktuierte Bremseinrichtung (5) innerhalb der Rollenhülse (4) angeordnet ist, wobei die Bremseinrichtung (5) ausgebildet ist, in Abhängigkeit eines an der Bremseinrichtung (5) anliegenden elektrischen Stroms eine die Rollenhülse (4) abbremsende Bremswirkung zu erzeugen. Innerhalb der Rollenhülse (4) ist eine mit der Bremseinrichtung (5) elektrisch verbundene Stromerzeugungseinrichtung (6) angeordnet, wobei die Stromerzeugungseinrichtung (6) ausgebildet ist, bei einer Drehung der Rollenhülse (4) den an der Bremseinrichtung (5) anliegenden elektrischen Strom zu erzeugen.

## Beschreibung

Die Erfindung betrifft eine Bremsrolle eines Rollenförderers, wobei die Bremsrolle eine auf einer drehfest angeordneten Welle drehbar gelagerte Rollenhülse aufweist, wobei eine elektrisch aktuierte Bremseinrichtung innerhalb der Rollenhülse angeordnet ist, wobei die Bremseinrichtung ausgebildet ist, in Abhängigkeit eines an der Bremseinrichtung anliegenden elektrischen Stroms eine die Rollenhülse abbremsende Bremswirkung zu erzeugen.

Die Erfindung betrifft weiterhin einen Rollenförderer mit einer derartigen Bremsrolle.

Rollenförderer, die auch als Rollenbahnen bezeichnet werden, werden insbesondere in der Intralogistik, beispielsweise in Durchlaufregalen, für den Transport von Lasten, beispielsweise Waren, innerhalb eines Gebäudes verwendet. Hierbei sind insbesondere schwerkraftbetriebene Rollenförderer bekannt, bei denen der Transport der Lasten auf den Rollen des Rollenförderer mittels Schwerkraft erfolgt. Schwerkraftbetriebene Rollenförderer sind hierzu gegenüber der Horizontalen geneigt angeordnet, so dass sich eine auf dem Rollenförderer abgestellte Last unter Einwirkung der Schwerkraft entlang des Rollenförderers bewegt und die Rollen des Rollenförderers antreibt. Bei schwerkraftbetriebenen Rollenförderer wird die Last entlang des geneigten Rollenförderers von einem höher gelegenen Ende des Rollenförderers unter Wirkung der Schwerkraft zu einem tiefer gelegenen Ende des Rollenförderers bewegt und an dem tiefer gelegenen Ende an einem Anschlag des Rollenförderers gestoppt.

Bei schwerkraftbetriebenen Rollenförderern stellen sich unterschiedliche Geschwindigkeiten und Aufprallkräfte an dem Anschlag von Lasten in Abhängigkeit vom Gewicht der Last ein. Je schwerer die Last, desto höher ist die Geschwindigkeit auf den Rollen des Rollenförderers und damit die Aufprallenergie am Anschlag des Rollenförderers. Ist die Aufprallenergie zu hoch, kann der Anschlag des Rollenförderers und/oder die Last beschädigt werden.

Um dieses Problem zu adressieren, ist es bereits bekannt, an dem Rollenförderer eine oder mehrere Bremsrollen vorzusehen, die mit einer Bremseinrichtung versehen ist, die eine eine Rollenhülse der Bremsrolle abbremsende Bremswirkung erzeugt. Die Bremseinrichtung ist bei bekannten Bremsrollen von Rollenförderern auf ein fest vorgegebenes und vordefiniertes Bremsmoment ausgelegt bzw. eingestellt, das vom zu erwartenden Gewicht der Lasten abhängt. Die kleinste zu erwartende Last darf nicht in ihrer Bewegung auf der Rollenfördere gestoppt werden, während unter gleichen Bedingungen die größte zu erwartende Last so weit wie nötig abgebremst werden muss, um beim Stoppen am Anschlag keine Schäden zu verursachen. Dies schränkt den Bereich der möglichen Lasten auf dem Rollenförderer ein und führt dennoch zu unterschiedlichen Geschwindigkeiten verschieden schwerer Lasten. Werden unterschiedlich schwere Lasten auf einem schwerkraftbetriebenen Rollenförderer jedoch nicht mit der gleichen Geschwindigkeit transportiert, ist die Transportzeit der Lasten kaum vorhersehbar.

Um für verschieden schwere Lasten gleiche Geschwindigkeiten auf dem Rollenförderer erzielen zu können, sind bereits Bremsrollen mit einer aktiv ansteuerbaren Bremseinrichtung bekannt, bei denen eine elektrisch aktuierte Bremseinrichtung innerhalb der Rollenhülse angeordnet ist, die in Abhängigkeit eines an der Bremseinrichtung anliegenden elektrischen Stroms eine die Rollenhülse abbremsende Bremswirkung erzeugt. Durch Variierung des an der Bremseinrichtung anliegenden elektrischen Stroms kann bei derartigen Bremsrollen das erzeugte Bremsmoment an das Gewicht der Last angepasst werden. Derartige Bremsrollen sind in der Lage, jede erwartete Last auf eine definierte Geschwindigkeit abzubremsen. Die Bremseinrichtung der Bremsrolle muss hierzu jedoch aktiv angesteuert werden und benötigt eine externe und somit von der Bremsrolle getrennt angeordnete Ansteuereinrichtung, die mit der Bremseinrichtung in der Bremsrolle verkabelt werden muss. Die Ansteuereinrichtung umfasst eine Stromversorgung für die innerhalb der Bremsrolle angeordnete Bremseinrichtung und eine Sensorik für die Erfassung des Gewichtes und/oder der Geschwindigkeit der beförderten Last. Die mit der Bremseinrichtung verkabelte Ansteuereinrichtung und die erforderliche Sensorik verursachen jedoch einen hohen Bauaufwand der Bremsrolle und führen zu einem hohen Wartungsaufwand sowie einer hohen Störanfälligkeit der Bremsrolle.

Der vorliegenden Erfindung liegt die Aufgabe zugrunde, eine Bremsrolle der eingangs genannten Gattung zur Verfügung zu stellen, die hinsichtlich der genannten Nachteile verbessert ist.

Diese Aufgabe wird gemäß einem ersten Aspekt der Erfindung durch eine Bremsrolle eines Rollenförderers, wobei die Bremsrolle eine auf einer drehfest angeordneten Welle drehbar gelagerte Rollenhülse aufweist, wobei eine elektrisch aktuierte Bremseinrichtung innerhalb der Rollenhülse angeordnet ist, wobei die Bremseinrichtung ausgebildet ist, in Abhängigkeit eines an der Bremseinrichtung anliegenden elektrischen Stroms eine die Rollenhülse abbremsende Bremswirkung zu erzeugen, gelöst, bei der innerhalb der Rollenhülse eine mit der Bremseinrichtung elektrisch verbundene Stromerzeugungseinrichtung angeordnet ist, wobei die Stromerzeugungseinrichtung ausgebildet ist, bei einer Drehung der Rollenhülse der Bremsrolle den an der Bremseinrichtung anliegenden elektrischen Strom zu erzeugen.

Gemäß der Erfindung ist somit die Stromerzeugungseinrichtung, die den an der Bremseinrichtung anliegenden elektrischen Strom erzeugt, innerhalb der Rollenhülse der Bremsrolle angeordnet und somit in die Bremsrolle integriert. Hierdurch ist bei der erfindungsgemäßen Bremsrolle keine externe, mit der Bremsrolle zu verkabelnde Ansteuereinrichtung mit einer entsprechenden Stromversorgung für die innerhalb der Bremsrolle angeordnete Bremseinrichtung erforderlich, wodurch sich ein geringer Bauaufwand der erfindungsgemäßen Bremsrolle mit geringem Wartungsaufwand sowie einer geringen Störanfälligkeit ergeben.

Gemäß einer vorteilhaften Ausführungsform der Erfindung ist die Stromerzeugungseinrichtung als Gleichstromgenerator ausgebildet. Hierdurch werden besondere Vorteile erzielt, da der Gleichstromgenerator einen an der Bremseinrichtung anliegenden elektrischen Strom erzeugt, der abhängig ist von der Drehgeschwindigkeit bzw. der Drehzahl der Rollenhülse der Bremsrolle und somit von dem Gewicht der Last. Dadurch wird in einfacher Weise erzielt, dass die Bremsrolle ein Bremsmoment erzeugt, das abhängig ist von der Drehgeschwindigkeit bzw. der Drehzahl der Rollenhülse der Bremsrolle und somit von dem Gewicht der Last. Hierdurch wird der Bauaufwand, der Wartungsaufwand und die Störanfälligkeit der erfindungsgemäßen Bremsrolle weiter verringert, da keine Sensorik für die Erfassung des Gewichtes und/oder der Geschwindigkeit der beförderten Last erforderlich ist.

Gemäß einer vorteilhaften Ausführungsform der Erfindung ist die Bremseinrichtung als magnetorheologische Bremse ausgebildet. Hierdurch ergeben sich besondere Vorteile, da mit einer magnetorheologische Bremse in einfacher Weise ein Bremsmoment der Bremsrolle erzeugt werden kann, das abhängig ist von dem an der Bremse anliegenden elektrischen Strom.

Gemäß einer vorteilhaften Ausführungsform der Erfindung umfasst die magnetorheologische Bremse ein mit der Welle drehfest verbundenes magnetisch leitfähiges erstes Bauelement und ein mit der Rollenhülse drehfest verbundenes magnetisch leitfähiges zweites Bauelement, wobei zwischen dem ersten Bauelement und dem zweiten Bauelement ein Spalt ausgebildet ist, in dem magnetorheologisches Medium, insbesondere magnetorheologisches Fluid, angeordnet ist, wobei das erste Bauelement oder das zweite Bauelement mit einer Spule versehen ist, die mit der Stromerzeugungseinrichtung elektrisch verbunden ist. Der Spalt zwischen dem ersten Bauelement und dem zweiten Bauelement kann gemäß einer Ausführung einer magnetorheologischen Bremse beispielsweise axial ausgeführt sein, wobei insbesondere durch die Ausbildung mehrerer axialer Spalte eine große Spaltfläche ermöglicht wird, die ein hohes Bremsmoment und eine hohe Bremsleistung ermöglicht. Darüber hinaus können gemäß einer weiteren Ausführung einer magnetorheologischen Bremse das erste Bauelement und das zweite Bauelement von Wälzkörpern und Verzahnungen gebildet werden, zwischen denen mit magnetorheologisches Medium gefüllte Spalte ausgebildet sind.

Gemäß einer vorteilhaften Ausführungsform der Erfindung umfasst die magnetorheologische Bremse einen mit der Welle drehfest verbundenen magnetisch leitfähigen inneren Ring als erstes Bauelement und einen mit der Rollenhülse drehfest verbundenen magnetisch leitfähigen äußeren Ring als zweites Bauelement, wobei zwischen dem inneren Ring und dem äußeren Ring ein Ringspalt ausgebildet ist, in dem magnetorheologisches Medium, insbesondere magnetorheologisches Fluid, angeordnet ist, wobei der innere Ring oder der äußere Ring mit einer Spule versehen ist, die mit der Stromerzeugungseinrichtung elektrisch verbunden ist. Eine derartige magnetorheologische Bremse kann in einfacher Weise zusammen mit der als Gleichstromgenerator ausgebildete Stromerzeugungseinrichtung innerhalb der Rollenhülse der Bremsrolle eingebaut und somit in die Bremsrolle integriert werden.

Eine derartige Ausführung einer magnetorheologischen Bremse mit einem als Radialspalt ausgebildeten Ringspalt ermöglicht einen guten Kompromiss aus Bauraum, Bremsleistung und technischer Komplexität.

Gemäß einer vorteilhaften Ausführungsform der Erfindung ist Gleichstromgenerator in radialer Richtung zwischen der Welle und dem äußeren Ring angeordnet. Der Generator kann hierdurch in einfacher Weise von dem äußeren Ring, der mit der drehenden Rollenhülse drehfest verbunden ist, angetrieben werden.

Gemäß einer vorteilhaften Ausführungsform der Erfindung weist die Bremseinrichtung eine Steuerplatine auf, insbesondere eine mit der Welle drehfest verbundene Steuerplatine Die Steuerplatine steht bevorzugt eingangsseitig mit der Stromerzeugungseinrichtung und ausgangseitig mit der Bremseinrichtung in Wirkverbindung.

Gemäß einer vorteilhaften Ausführungsform der Erfindung ist die Steuerplatine mit mindestes einer elektrischen oder elektronischen Komponente, insbesondere einer passiven elektrischen oder elektronischen Komponente, und/oder einer Steckerverbindung und/oder einer drahtlosen Kommunikationsschnittstelle versehen. Mit einer elektrischen oder elektronischen Komponente, insbesondere einer passiven elektrischen oder elektronischen Komponente, kann in einfacher Weise durch Beeinflussung des von der Stromerzeugungseinrichtung erzeugten elektrischen Stromes die Bremswirkung und somit das Bremsmoment der Bremsrolle an den Anwendungsfall angepasst werden. Mittels einer Steckerverbindung und/oder einer drahtlosen Kommunikationsschnittstelle kann die Bremseinrichtung in einfacher Weise von einer übergeordneten Steuereinrichtung angesteuert werden und/oder die Bremsrolle ihre Zustandsinformationen einer übergeordneten Steuereinrichtung bereitstellen. Hierdurch kann beispielsweise eine kabelgebundene oder kabellose Datenübertragung zur gezielteren Anpassung der Bremseigenschaften der Bremsrolle erzielt werden, beispielsweise am Ende des Rollenförderers für einen genaueren Endanschlag der Last oder als Lösung zum Einschleusen der Last von dem Rollenförderer in ein anderes Fördersystem. Mittels der Steckerverbindung kann beispielsweise der an der Bremseinrichtung anliegende elektrische Strom vollständig oder teilweise von einer externen, beispielsweise einer rollen-externen, Stromerzeugungseinrichtung zugeführt werden. Dadurch kann beispielsweise die Bremseinrichtung dauerhaft blockiert werden und/oder die Bremsleistung der Bremseinrichtung extern dynamisch gesteuert werden soll.

Gemäß einer vorteilhaften Ausführungsform der Erfindung sind die elektrisch aktuierte Bremseinrichtung und die Stromerzeugungseinrichtung als vormontierte Bremsmoduleinheit ausgebildet, die in die Bremsrolle einbaubar ist. Da die erfindungsgemäße Bremseinrichtung keine rollen-externe Ansteuereinrichtung und keine rollen-externe Stromversorgung benötigt, kann in einfacher Weise die elektrisch aktuierte Bremseinrichtung und die Stromerzeugungseinrichtung als vormontierte Bremsmoduleinheit ausgebildet werden, die in die Bremsrolle einbaubar ist. In die Bremsrolle kann hierbei nur eine Bremsmoduleinheit oder auch mehrere Bremsmoduleinheit eingebaut werden, wodurch in einfacher Weise das Bremsmoment der Bremsrolle skalierbar an die Anforderung des Rollenförderers angepasst werden kann.

Die oben genannte Aufgabe wird gemäß einem zweiten Aspekt der Erfindung durch einen Rollenförderer, insbesondere einen schwerkraftbetriebenen Rollenförderer, mit mindestens einer oben beschriebenen Bremsrolle gelöst.

Der Rollenförderer weist die bereits im Zusammenhang mit der Bremsrolle beschriebenen Vorteile auf.

Die Erfindung bietet eine Reihe von Vorteilen.

Die erfindungsgemäße Bremsrolle weist ein selbstregulierende bzw. sich selbst steuerndes Bremssystem auf, das von der Bremseinrichtung und der Stromerzeugungseinrichtung gebildet ist, das ohne rollen-externe Ansteuereinrichtung und ohne rollen-externe Stromversorgung ein von dem Gewicht der Last abhängiges Bremsmoment zum Abbremsen der transportierten Last erzeugt.

Durch geeignete Anpassung der Abmessungen der als magnetorheologischen Bremse ausgebildeten Bremseinrichtung, der Spule sowie des Generators sowie der gegebenenfalls vorhandenen elektrischen oder elektronischen Komponenten zwischen Generator und Spule der magnetorheologischen Bremse kann die erfindungsgemäße Bremsrolle in einfacher Weise an unterschiedliche Anwendungsfälle angepasst werden.

Die erfindungsgemäße Bremsrolle ist in der Lage, Lasten mit unterschiedlichen Gewichten auf ein vordefiniertes Geschwindigkeitsniveau abzubremsen, ohne dass eine rollen-externe Ansteuereinrichtung oder rollen-externe Stromversorgung für die elektrisch aktuierte, in der Bremsrolle angeordnete Bremseinrichtung erforderlich ist, wodurch das Lasthandling auf dem Rollenförderer verbessert wird.

Die Bremseinrichtung mit der Stromerzeugungseinrichtung weist eine geringen Bauraumbedarf auf und kann in einfacher Weise in bestehende Rollenkonstruktionen von Rollenförderern integriert werden, ohne dass zusätzliche Anpassungen an anderen Systemkomponenten erforderlich wären.

Da die Bremseinrichtung mit der Stromerzeugungseinrichtung als vormontierte Bremsmoduleinheit ausgeführt werden kann, kann die Anzahl der Bremsmoduleinheiten sowie das Bremsmoment jeder Bremsmoduleinheit an das benötigte Bremsmoment des Rollenförderers in einfacher Weise angepasst werden.

Die erfindungsgemäße Bremsrolle ermöglicht eine steuerbare Geschwindigkeit der transportierten Last und eine steuerbare Anschlagenergie der Last an einem Anschlag bei einem schwerkraftbetriebenen Rollenförderer unabhängig vom Gewicht der Last.

Die erfindungsgemäße Bremsrolle kann hinsichtlich des Bremsmoments in einfacher Weise an ein breites Spektrum von Lasten oder kraftempfindliche Lasten angepasst werden.

Weitere Vorteile und Einzelheiten der Erfindung werden anhand des in der schematischen Figur dargestellten Ausführungsbeispiels näher erläutert.

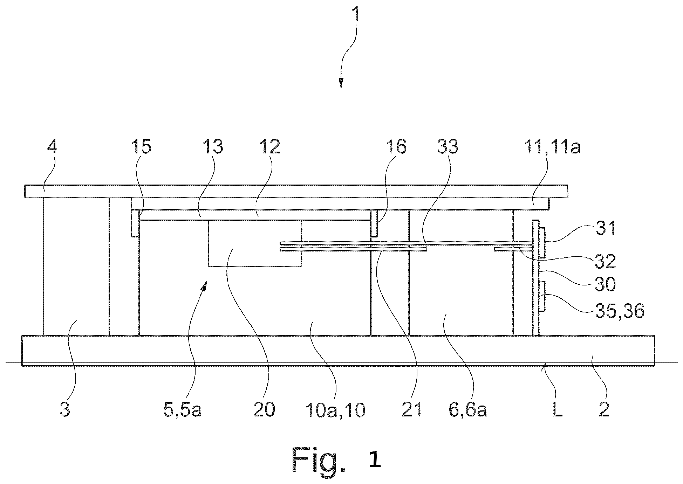

In der Figur ist eine erfindungsgemäße Bremsrolle 1 eines Rollenförderers, beispielsweise eines schwerkraftbetriebenen Rollenförderers, in einem Längsschnitt dargestellt.

Die Bremsrolle 1 weist eine drehfest angeordneten Welle 2 auf, auf der mittels einer Lagerung 3 eine Rollenhülse 4 um die Längsachse L drehbar gelagert.

In radialer Richtung zwischen der Welle 2 und der Rollenhülse 4 und somit innerhalb der Rollenhülse 4 ist eine elektrisch aktuierte Bremseinrichtung 5 angeordnet, die in Abhängigkeit eines an der Bremseinrichtung 5 anliegenden elektrischen Stroms eine die Rollenhülse 4 abbremsende Bremswirkung und somit ein Bremsmoment erzeugt.

Die Bremseinrichtung 5 ist als magnetorheologische Bremse 5a ausgebildet.

Innerhalb der Rollenhülse 4 ist eine mit der Bremseinrichtung 5 elektrisch verbundene Stromerzeugungseinrichtung 6 angeordnet, die bei einer Drehung der Rollenhülse 4 den an der Bremseinrichtung 5 anliegenden elektrischen Strom erzeugt.

Die Stromerzeugungseinrichtung 6 ist als Gleichstromgenerator 6a ausgebildet.

Die magnetorheologische Bremse 5a weist im dargestellten Ausführungsbeispiel einen mit der Welle 2 drehfest verbundenen magnetisch leitfähigen inneren Ring 10 als erstes Bauelement 10a und einen mit der drehbaren Rollenhülse 4 drehfest verbundenen magnetisch leitfähigen äußeren Ring 11 als zweites Bauelement 11a auf. Radial zwischen dem inneren Ring 10 und dem äußeren Ring 11 ist ein als Radialspalt ausgebildeter Ringspalt 12 ausgebildet, in dem magnetorheologisches Medium 13, beispielsweise magnetorheologisches Fluid, angeordnet ist. Der Ringspalt 12 ist an den axialen Endbereichen mittels Dichtungseinrichtungen 15, 16 abgedichtet.

Im dargestellten Ausführungsbeispiel ist der innere Ring 11 mit einer Spule 20 versehen, die mit der Stromerzeugungseinrichtung 6 elektrisch verbunden ist. Hierzu ist im dargestellten Ausführungsbeispiel eine Verkabelung 21 vorgesehen, die von dem Gleichstromgenerator 6a zu der Spule 20 geführt ist.

Der Gleichstromgenerator 6a ist im dargestellten Ausführungsbeispiel in radialer Richtung zwischen der feststehenden Welle 2 und dem drehbaren äußeren Ring 11 der Bremseinrichtung 5 angeordnet.

Gemäß einer Weiterbildung kann die Bremseinrichtung 5 eine Steuerplatine 30 aufweisen. Im dargestellten Ausführungsbeispiel ist die Steuerplatine 30 mit der Welle 2 drehfest verbunden.

Die gegebenenfalls vorhandene Steuerplatine 30 ist mit mindestens einer elektrischen oder elektronischen Komponente 31, beispielsweise einer passiven elektrischen oder elektronischen Komponente, versehen. Die elektrische oder elektronische Komponente 31 steht eingangsseitig mittels einer Verkabelung 32 mit dem Gleichstromgenerator 6a in Verbindung und ausgangsseitig mittels einer Verkabelung 33 mit der Spule 20. Die elektrische oder elektronische Komponente 31 ist vorgesehen, um den über die Verkabelung 32 zugeführten Strom des Gleichstromgenerators 6a zur Aktuierung der Spule 20 zu beeinflussen.

Die gegebenenfalls vorhandene Steuerplatine 30 kann zusätzlich oder alternativ mit einer Steckerverbindung 35 und/oder einer drahtlosen Kommunikationsschnittstelle 36 versehen sein, über die eine Verbindung zu einer übergeordneten Steuerung möglich ist.

Die magnetorheologische Bremse 5a ist bevorzugt mit dem Gleichstromgenerator 6a und der Verkabelung 21 sowie der gegebenenfalls vorhandenen Steuerplatine 30 mit der Verkabelung 32, 33 als vormontierte Bremsmoduleinheit ausgebildet, die in die Bremsrolle 1 einbaubar ist.

Die erfindungsgemäße Bremsrolle 1 mit der als magnetorheologischen Bremse 5 ausgebildeten Bremseinrichtung 5 und der als Gleichstromgenerator 6a ausgebildeten Stromerzeugungseinrichtung 6, die den elektrischen Strom zur Ansteuereng der Spule 20 der magnetorheologischen Bremse 5 erzeugt, arbeitet wie folgt.

Das Bremsmoment der magnetorheologischen Bremse 5 ist - bei gegebener konstanter Spannung - abhängig von dem an der Spule 20 angelegten elektrischen Strom. Je höher der an der Spule 20 anliegende elektrische Strom ist, desto höher ist das erzeugte Bremsmoment der Rollenhülse 4 der Bremsrolle 1.

Der vom Gleichstromgenerator 6a erzeugte elektrische Strom, der an der Spule 20 anliegt, hängt - bei gegebener konstanter Spannung - von der Winkelgeschwindigkeit und somit der Drehzahl der Rollenhülse 4 ab. Je höher die Drehzahl der Rollenhülse 4 und somit die Geschwindigkeit der transportierten Last auf der Rollenhülse 4 ist, desto höher ist der von dem Gleichstromgenerator 6a erzeugte elektrische Strom. Der von dem Gleichstromgenerator 6a erzeugte Strom wird in die Spule 20 der magnetorheologischen Bremse 5a eingespeist und führt zu einem Bremsmoment, das von der Drehzahl der Rollenhülse 4 und somit von der Geschwindigkeit der auf dem Rollenförderer beförderten Last abhängt und die Last abbremst.

Die Bremsrolle 1 mit der integrierte magnetorheologischen Bremse 5a und dem integrierten, von der Rollenhülse 4 angetriebenen Gleichstromgenerator 6a weist somit eine von der Drehzahl der Rollenhülse 4 drehzahlabhängige Ansteuerung der magnetorheologischen Bremse 5a und somit ein von der Drehzahl der Rollenhülse 4 drehzahlabhängiges Bremsmoment auf, wobei mit zunehmender Drehzahl der Rollenhülse ein zunehmendes Bremsmoment der Bremsrolle 1 erzeugt wird.

Die Geschwindigkeit der auf dem Rollenförderer beförderten Last ist bei einem als schwerkraftbetriebenen Rollenförderer von dem Gewicht der Last abhängig, so dass die erfindungsgemäße Bremsrolle 1 automatisch ein Bremsmoment erzeugt, dass sich selbstständig an das Gewicht der Last anpasst.

Die Erfindung ist nicht auf das dargestellte Ausführungsbeispiel beschränkt.

Für die magnetorheologische Bremse 5a ist alternativ eine Ausführung möglich, bei der der mit magnetorheologischem Medium 13, beispielsweise magnetorheologischem Fluid, gefüllte Spalt 12 zwischen dem ersten Bauelement 10a und dem zweiten Bauelement 11a als Axialspalt ausgebildet ist.

Gemäß einer alternativen Ausführungsform der Bremsrolle 1 kann sich die Steuerplatine 30 und/oder die Spule 20 im rotierenden Teil der Bremseinrichtung 5 (äußeren Ring 11 oder zweites Bauelement 11a) befinden.

## Patentansprüche

1. Bremsrolle (1) eines Rollenförderers, wobei die Bremsrolle (1) eine auf einer drehfest angeordneten Welle (2) drehbar gelagerte Rollenhülse (4) aufweist, wobei eine elektrisch aktuierte Bremseinrichtung (5) innerhalb der Rollenhülse (4) angeordnet ist, wobei die Bremseinrichtung (5) ausgebildet ist, in Abhängigkeit eines an der Bremseinrichtung (5) anliegenden elektrischen Stroms eine die Rollenhülse (4) abbremsende Bremswirkung zu erzeugen, **dadurch gekennzeichnet, dass** innerhalb der Rollenhülse (4) eine mit der Bremseinrichtung (5) elektrisch verbundene Stromerzeugungseinrichtung (6) angeordnet ist, wobei die Stromerzeugungseinrichtung (6) ausgebildet ist, bei einer Drehung der Rollenhülse (4) den an der Bremseinrichtung (5) anliegenden elektrischen Strom zu erzeugen.

2. Bremsrolle (1) nach Anspruch 1, **dadurch gekennzeichnet, dass** die Stromerzeugungseinrichtung (6) als Gleichstromgenerator (6a) ausgebildet ist.

3. Bremsrolle (1) nach Anspruch 1 oder 2, **dadurch gekennzeichnet, dass** die Bremseinrichtung (5) als magnetorheologische Bremse (5a) ausgebildet ist.

4. Bremsrolle (1) nach Anspruch 3, **dadurch gekennzeichnet, dass** die magnetorheologische Bremse (5a) ein mit der Welle (2) drehfest verbundenes magnetisch leitfähiges erstes Bauelement (10a) und ein mit der Rollenhülse (4) drehfest verbundenes magnetisch leitfähiges zweites Bauelement (11a) umfasst, wobei zwischen dem ersten Bauelement (10a) und dem zweiten Bauelement (11a) ein Spalt (12) ausgebildet ist, in dem magnetorheologisches Medium (13), insbesondere magnetorheologisches Fluid, angeordnet ist, wobei das erste Bauelement (10a) oder das zweite Bauelement (11a) mit einer Spule (20) versehen ist, die mit der Stromerzeugungseinrichtung (6) elektrisch verbunden ist.

5. Bremsrolle (1) nach Anspruch 3 oder 4, **dadurch gekennzeichnet, dass** die magnetorheologische Bremse (5a) einen mit der Welle (2) drehfest verbundenen magnetisch leitfähigen inneren Ring (10) als erstes Bauelement (10a) und einen mit der Rollenhülse (4) drehfest verbundenen magnetisch leitfähigen äußeren Ring (11) als zweites Bauelement (11a) umfasst, wobei zwischen dem inneren Ring (10) und dem äußeren Ring (11) ein Ringspalt (12) ausgebildet ist, in dem magnetorheologisches Medium (13), insbesondere magnetorheologisches Fluid, angeordnet ist, wobei der innere Ring (10) oder der äußere Ring (11) mit einer Spule (20) versehen ist, die mit der Stromerzeugungseinrichtung (6) elektrisch verbunden ist.

6. Bremsrolle (1) nach Anspruch 5, **dadurch gekennzeichnet, dass** der Gleichstromgenerator (6a) in radialer Richtung zwischen der Welle (2) und dem äußeren Ring (11) angeordnet ist.

7. Bremsrolle (1) nach einem der Ansprüche 1 bis 6, **dadurch gekennzeichnet, dass** die Bremseinrichtung (5) eine Steuerplatine (30) aufweist, insbesondere eine mit der Welle (2) drehfest verbundene Steuerplatine (30).

8. Bremsrolle (1) nach Anspruch 7, **dadurch gekennzeichnet, dass** die Steuerplatine (30) mit mindestes einer elektrischen oder elektronischen Komponente (31), insbesondere einer passiven elektrischen oder elektronischen Komponente, und/oder einer Steckerverbindung (35) und/oder einer drahtlosen Kommunikationsschnittstelle (36) versehen ist.

9. Bremsrolle (1) nach einem der Ansprüche 1 bis 8, **dadurch gekennzeichnet, dass** die elektrisch aktuierte Bremseinrichtung (5) und die Stromerzeugungseinrichtung (6) als vormontierte Bremsmoduleinheit ausgebildet sind, die in die Bremsrolle (1) einbaubar ist.

10. Rollenförderer, insbesondere schwerkraftbetriebener Rollenförderer, mit mindestens einer Bremsrolle (1) nach einem der Ansprüche 1 bis 9.
